(19) Europäisches Patentamt
European Patent Office
Office européen des brevets

(11) Publication number: **0 434 223 A1**

# (12) EUROPEAN PATENT APPLICATION

(21) Application number: **90312711.6**

(22) Date of filing: **22.11.90**

(51) Int. Cl.[5]: **C08G 73/02**, C08G 81/00, C08G 65/32

(30) Priority: **22.11.89 US 440630**

(43) Date of publication of application: **26.06.91 Bulletin 91/26**

(84) Designated Contracting States: **BE DE FR GB IT NL**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Saegusa, Takeo**
**8-22 Toji-in Kitamachi, Kita-ku**
**Kyoto 603(JP)**
Inventor: **Aoi, Keigo**
**No.202 Okamoto-mansyon, 65 Izumidono-cho**
**Yoshida Sakyo-ku, Kyoto 606(JP)**
Inventor: **Chujo, Yoshiki**
**25-102, 1-23 Higashibirai-cho, Takano, Sakyo-ku**
**Tokyo(JP)**
Inventor: **Yamanaka, Hidenori, Kyoto Univ.Muromachi-Ryo**
**7-1 Takezono-cho, 2-chome Kuramaguchi-sagaru**
**Muromachi-dori, Kamigyo-ku, Tokyo(JP)**
Inventor: **Miyamoto, Masatoshi**
**3-1-16-302, Oh'e, Ohtsu**
**Shiga 522(JP)**

(74) Representative: **Cropp, John Anthony David et al**
**MATHYS & SQUIRE 10 Fleet Street**
**London, EC4Y 1AY(GB)**

## (54) Oxyalkylene/n-acylalkylenimine block copolymers useful as surfactants.

(57) Copolymers useful as surfactants and having polyoxyalkylene and poly(N-acylalkylenimine) blocks are disclosed. In a preferred embodiment, the copolymer contains polyoxypropylene and poly(N-acetylethylenimine) blocks. The block copolymers can be prepared by reacting a sulfonate ester terminated polyalkylene glycol with a 2-oxazoline or 1,3-oxazine monomer.

EP 0 434 223 A1

# OXYALKYLENE/N-ACYLALKYLENIMINE BLOCK COPOLYMERS USEFUL AS SURFACTANTS

## BACKGROUND OF THE INVENTION

This invention pertains to novel copolymers containing polyoxyalkylene blocks and poly (N-acylalkylenimine) blocks useful as surfactants. The invention additionally relates to methods for the preparation of the block copolymers.

A surfactant is a compound which reduces the surface tension of an aqueous solution when dissolved in water or which reduces the interfacial tension between two normally immiscible liquids such as oil and water. Surfactants (surface active agents) have numerous uses as emulsifiers, foaming agents, dispersants, detergents, wetting agents, and so forth. In addition, some surfactants facilitate the blending of two immiscible polymers or of a polymer and an additive such as a pigment, stabilizer, or anti-oxidant. Many different types of surfactants, particularly non-ionic surfactants, are in widespread use at the present time. A useful summary of the surfactant field may be found in Kirk-Othmer Encyclopedia of Chemical Technology Vol. 22, Wiley-Interscience (1983), pp 332-432.

Surfactants containing poly(N-acylethylenimine) blocks are known.

Kobayashi et al [Macromolecules 20, 2(1987)] and U.S. Pat. No. 4,261,925 describe non-ionic surfactants containing poly(N-acylalkylenimine) hydrophilic segments and hydrophobic segments derived from long chain hydrocarbons or fluorocarbons.

Kobayashi et al [Macromolecules 19, 535(1986)] and Litt et al [Polym. Preprints 10, 905(1969)] teach ABA and AB block copolymers in which each block is derived from a 2-substituted oxazoline monomer. In the hydrophilic blocks, the oxazoline monomer is substituted with a $C_1$-$C_3$ alkyl group. In the hydrophobic blocks, the monomer bears a long chain alkyl group.

Other block copolymers of 2-substituted-2-oxazolines are also known in the literature.

U.S. Pat. Nos. 4,703,085 and 4,782,122 teach ABA block copolymers useful as impact modifiers for imide-containing thermoplastic molding compositions. Poly(N-acylethylenimine) end blocks and polyisobutylene midblocks are present in these copolymers.

Percec [Polymer Bull. 5, 643(1981)] describes triblock polymers having poly(N-acylethylenimine) blocks and poly(ethylene glycoladipate) blocks. No utility for these copolymers is described.

Miyamoto et al [Eur. Polym. J. 19, 955(1983)] teach anti-static agents which are block copolymers of ethylene oxide and 2-alkyl-2-oxazolines.

Saegusa et al [Macromolecules 6, 805(1973)] teach the preparation of water-insoluble 2-oxazoline/butadiene block copolymers.

Seung et al [J. Polym. Sci. Polym. Lett. 11, 233 (1979); Polym. Bull. 1, 481(1979); J. Polym. Sci. Polym. Lett. 18, 89(1980)] have reported AB-type copolymers having polystyrene, polystyrene oxide, or poly-(isobutyl vinyl ether) as the B block and poly(N-acetylethylenimine) as the A block. ABA block copolymers of styrene and 2-methyl-2-oxazoline have also been prepared [Morishima et al Polym. Bull. 5, 19(1981)].

## SUMMARY OF THE INVENTION

This invention provides copolymers comprised of a polyoxyalkylene block and at least one poly(N-acylalkylenimine) block. The novel copolymers have the general structure

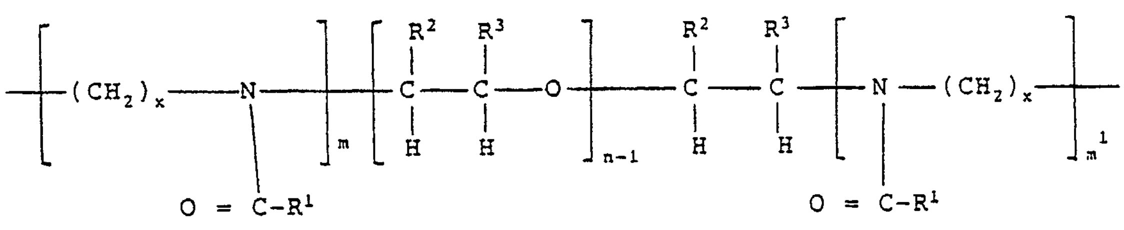

wherein x is 2 or 3, $R^1$ is hydrogen or $C_1$-$C_3$ alkyl, n and ($m + m^1$) are each at least about 5, and $R^2$ and $R^3$ are the same or different and are hydrogen, $C_1$-$C_{12}$ linear, branched or cyclic alkyl, provided $R^2$ and $R^3$ are not both hydrogen. In a particularly preferred embodiment, the polyoxyalkylene block is a polyoxypropylene block and the poly(N-acylalkylenimine) block is a poly(N-acetylethylenimine) block.

A method for preparing these block copolymer is also furnished by this invention, wherein said method

comprises reacting a sulfonate ester terminated polyalkylene glycol with a 2-oxazoline or 1,3-oxazine monomer under conditions effective to achieve polymerization of the monomer. Preferably, the monomer is 2-methyl-2-oxazoline and the sulfonate ester terminated polyalkylene glycol is p-nitrobenzene sulfonate terminated polypropylene glycol.

The block copolymers of this invention are useful as surfactants and may be used to effectively reduce the surface tension of an aqueous medium when combined with the aqueous medium. In contrast to propylene oxide/ethylene oxide block copolymer surfactants, the poly(N-acylalkylenimine)-containing block copolymers are generally very soluble in water and do not exhibit cloud points at temperatures less than about 100 °C in aqueous solution.

## DETAILED DESCRIPTION OF THE INVENTION

The block copolymer of this invention contains a polyoxyalkylene block having repeating units of general structure

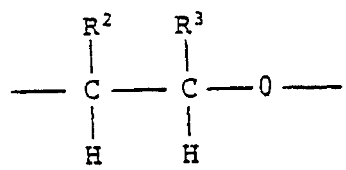

wherein $R^2$ and $R^3$ are the same or different and are hydrogen, $C_1$-$C_{12}$ linear, branched, or cyclic alkyl, provided $R^2$ and $R^3$ are not both hydrogen. For example, $R^2$ and $R^3$ may be methyl, ethyl, propyl, isopropyl, butyl, sec-butyl, iso-butyl, t-butyl, pentyl, hexyl, cyclohexyl, chloromethyl, or allyl oxymethyl ($CH_2=CHCH_2OCH_2$-), or a combination thereof. $R^2$ and $R^3$ may be covalently linked. For example, the oxyalkylene repeating unit may have the general structure:

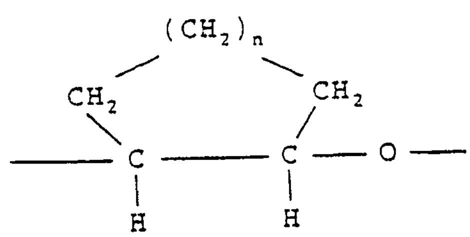

wherein n = 1-4. Preferably, one of $R^2$ or $R^3$ is hydrogen and the other substitutent is $C_1$-$C_3$ alkyl. Most preferably, $R^2$ and $R^3$ are different and are either hydrogen or methyl (i.e., the polyoxyalkylene block is a polyoxypropylene block). The number average molecular weight of the polyoxyalkylene block is not critical, but preferably is from about 250 to 10,000. Most preferably, the number average molecular weight is from about 400 to 3000.

Additionally, the block copolymer of this invention has at least one poly(N-acylalkylenimine) block having repeating units of general structure

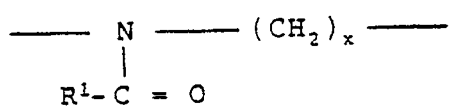

wherein x=2 or 3 and $R^1$ is hydrogen or $C_1$-$C_3$ alkyl. Illustrative $R^1$ groups include methyl, ethyl, n-propyl, and isopropyl, with methyl being preferred. Preferably, x = 2. The preferred poly(N-acylalkylenimine) block in the copolymer of this invention is a poly(N-acetylethylenimine) block.

Although the total number average molecular weight of the poly(N-acylalkylenimine) blocks can be any suitable value, it is preferably from about 250 to 30,000. Total number average molecular weights of from about 500 to 15,000 are most preferred.

Without wishing to be bound by theory, it is believed that the surfactant properties of the copolymers are attributable to the presence of hydrophobic and hydrophilic blocks within a single copolymer chain. The polyoxyalkylene block is thought to serve as the hydrophobic component while the poly(N-acylalkylenimine) block acts as the hydrophilic component.

The copolymers of this invention may be linear and can have either an AB or ABA structure, wherein A designates a poly(N-acylalkylenimine) block and B designates a polyoxyalkylene block. If the polyoxyalkylene block is branched, the copolymer can have a star or radial type structure. In general, the block copolymers of this invention preferably have linear AB or ABA structures.

The overall average ratio of N-acylalkylenimine repeating units to oxyalkylene repeating units can vary widely in the block copolymers of the present invention. Preferably, however, the ratio is from about 3:3 to 250:75, or, more preferably, from about 5:5 to 150:50. The number average molecular weight of the block copolymers is preferably from about 750 to 20,000.

The copolymers of this invention may be obtained by any suitable method. In a particularly favored method of preparation, a sulfonate ester terminated polyalkylene glycol is reacted with one or more 2-oxazoline and/or 1,3-oxazine monomer(s) under conditions effective to achieve polymerization of the monomer. The sulfonate ester terminated polyalkylene glycol is believed to function as an initiator, with the monomer polymerizing from each end of the polyalkylene glycol bearing a sulfonate group (Scheme I).

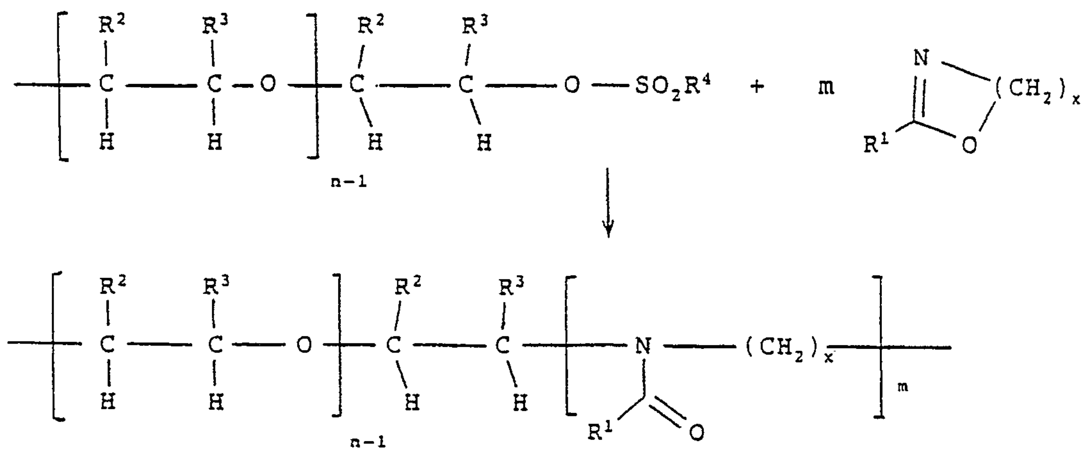

Scheme I

Suitable monomers for the preparation of the block copolymers of this invention are compounds corresponding to the general structure

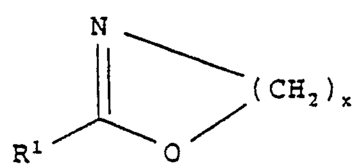

wherein $R^1$ = hydrogen or $C_1$-$C_3$ alkyl and x = 2 or 3. Illustrative monomers include, but are not limited to, 2-oxazoline, 2-methyl-2-oxazoline, 2-ethyl-2-oxazoline, 2-propyl-2-oxazoline, 2-isopropyl-2-oxazoline, 2-methyl-5,6-dihydro-4H-1,3-oxazine, 2-ethyl-5,6-dihydro-4H-1,3-oxazine, 2-propyl-5,6-dihydro-4H-1,3-oxazine, and 2-isopropyl-5,6-dihydro-4H-1,3-oxazine. Mixtures of these monomers may also be used. In general, monomers containing fewer carbon atoms will tend to yield poly(N-acylalkylenimene) blocks that are more hydrophilic in character, thereby enhancing the water solubility and surfactant properties of the block copolymers. For this reason, 2-oxazoline and 2-methyl-2-oxazoline are the preferred monomers.

The oxazoline and oxazine monomers may be obtained by any method known in the art, including

dehydration of N-(hydroxyalkyl) carboxamides, dehydrohalogenation of haloamides, isomerization of N-acylaziridines, cyclization of aminoalcohols with isocyanide, cyclization of hydroxyalkyl isocyamides, and reaction of nitriles with aminoalcohols. Such methods are reviewed in S. Kobayashi and T. Saegusa Ring-Opening Polymerization Vol. 2, Chapter 11, Elsevier, 1984, pp. 762-764.

In the sulfonate ester terminated polyalkylene glycol of Scheme I, $R^4$ may be any alkyl, haloalkyl, aryl, or substituted aryl group which makes the sulfonate ester group an effective initiator in the polymerization step. Suitable $R^4$ groups include, for example, p-nitrophenyl, p-methylphenyl, methyl, p-bromophenyl, trifluoromethyl, nonafluorobutyl, trifluoroethyl, and the like. In a preferred embodiment of this invention, the sulfonate ester group is a p-nitrobenzenesulfonate ("nosylate") group.

Any method known in the art may be employed to produce the sulfonate ester terminated polyalkylene glycol. For example, one convenient method is to react a polyalkylene glycol with a sulfonyl halide (e.g., p-nitrophenyl sulfonyl chloride) in the presence of a tertiary amine such as triethyl amine. The amine hydrohalide salt formed is then separated from the desired sulfonate ester terminated produced polyalkylene glycol. Other methods such as reaction of the polyalkylene glycol with an N, N-disubstituted sulfonamide or reaction of an olefin-terminated polyalkylene glycol with a sulfonic acid may also be used.

The polyalkylene glycols useful in forming the polyoxyalkylene blocks of the copolymers of this invention are well-known in the art and in general have the structure

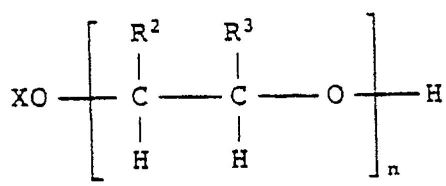

$R^2$ and $R^3$ are the same or different, provided both are not hydrogen, and may be hydrogen or $C_1$-$C_{12}$ linear, branched, or cyclic alkyl. X is most preferably hydrogen, but may also be alkyl (especially $C_1$-$C_5$ linear or branched alkyl) or a polyvalent hydrocarbon radical such as glyceryl.

The polyalkylene glycols can be obtained by a number of synthetic methods including, for example, the polymerization of epoxides using a polyhydric initiator and a catalyst such as an alkali metal hydroxide, double metal cyanide salt, metalloporphyrin, or the like. A review of such methods may be found in S. Inoue and T. Aida Ring-Opening Polymerization Vol. 1, Chapter 4, pp. 185-298, Elsevier, 1984. Illustrative epoxides include 1-butene oxide, 2-butene oxide, 1-pentene oxide, 2-pentene oxide, epichlorohydrin, allyl glycidyl ether, cyclohexene oxide, cyclopentene oxide, 1-octene oxide, and the like and mixtures thereof. Most preferably, however, the epoxide used is propylene oxide or a mixture of propylene oxide and another epoxide. Examples of commercially available polypropylene glycols useful in the preparation of the block copolymers of this invention include THANOL® PPG-2000 (a difunctional 2000 molecular weight polypropylene glycol sold by ARCO Chemical Company), THANOL® SF-1502 (a trifunctional 1500 molecular weight polypropylene glycol sold by ARCO Chemical Company), NIAX® PPG-725 (a difunctional 760 molecular weight polypropylene glycol sold by Union Carbide), UCON® LB-285 (a monofunctional 1020 molecular weight alcohol started polypropylene glycol sold by Union Carbide), and NIAX® PPG-4025 (a difunctional 4000 molecular weight polypropylene glycol sold by Union Carbide). Depending on the desired structure of the block copolymer (AB, ABA, branched, etc.), the polyalkylene glycol used may be mono-, di-, tri-, or poly functional (i.e., it may contain 1,2,3, or more hydroxyl groups on average). In general, the molar ratio of monomer to sulfonate ester terminated polyalkylene glycol is preferably from about 5:1 to 225:1.

The reaction between the sulfonate ester terminated polyalkylene glycol and the oxazoline or oxazine monomer is conducted under conditions effective to accomplish polymerization of the monomer. Preferably, reaction temperatures of from about 25 °C to 200 °C are employed. The temperature range between about 570 °C and 130 °C is most preferred, however, in order to minimize reaction time and undesired side reactions. In this temperature range, reaction times of from about 1 hour to 100 hours will normally be sufficient. The exact time is not critical and will depend on the desired degree of monomer conversion, the structure and reactivity of the monomer and sulfonate ester terminated polyalkylene glycol, and other factors. The polymerization may be carried out in bulk or in solution using an inert organic solvent, preferably an aprotic polar solvent such as nitromethane, dimethylformamide, or acetonitrile.

The order in which the reaction components are combined is not critical. Preferably, the process is

concluded in a batch-wise fashion under anhydrous conditions using a stirred reaction vessel and an inert atmosphere. The block copolymer produced can be purified by any suitable method including removal of the sulfonic acid by-product using an anionic exchange resin as well as reprecipitation using a solvent/non-solvent procedure.

Without further elaboration, it is believed that one skilled in the art can,using the preceding description, utilize the present invention to its fullest extent. The following examples, therefore, are to be considered as merely illustrative and not limitative of the claims or remainder of the disclosure in any way whatsoever.

## EXAMPLES 1-4

These examples demonstrate the preparation of sulfonate ester terminated polyalkylene glycols useful as initiators in the synthesis of the block copolymers of this invention.

Polypropylene glycol (difunctional) was esterified with p-nitrobenzene sulfonyl chloride (1.2 equiv. per equiv. of hydroxyl) in 2,6-lutidine at room temperature. The sulfonate ester terminated polypropylene glycol thus produced was washed with dilute sulfuric acid to remove excess 2,6-lutidine and then purified by dissolving in diethyl ether and reprecipitating with hexane. The extent of hydroxyl esterification was determined by $^1H$ NMR. The results are shown in Table 1.

TABLE 1

| Ex. No. | PPG Mn[1] | Product Yield, % | % Sulfonate End Groups[2] |
|---|---|---|---|
| 1 | 460 | 74 | 86 |
| 2 | 1300 | 84 | 90 |
| 3 | 1880 | 72 | 76 |
| 4 | 2760 | 77 | 75 |

[1] number average molecular weight of polypropylene glycol, determined by vapor pressure osmometry

[2] $\frac{\text{\% sulfonate ester end groups}}{\text{\% total end groups}} \times 100$

## EXAMPLES 5-9

These examples illustrate the reaction of the p-nitrobenzene sulfonate esters of polypropylene glycol prepared in Examples 1-4 with 2-methyl-2-oxazoline to prepare the block copolymers of this invention. Mixtures of nitromethane, sulfonate ester terminated polypropylene glycol, and 2-methyl-2-oxazoline were heated at 80°C for 7 hours using varying ratios of initiator and monomer (Table 2). The block copolymer products were purified by reprecipitation using chloroform (solvent) and diethyl ether (non-solvent) after treating methanolic solutions of the products with anionic exchange resin to remove pnitrobenzene sulfonic acid.

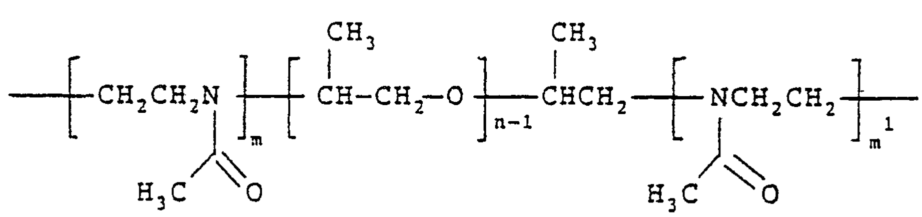

TABLE 2

| | | | Block Copolymer Product | | |
|---|---|---|---|---|---|
| Ex. No. | Initiator[1] | $[M]_0[I]^2_0$ | % Yield | Mn, VPO | Unit Ratio[3] n:(m + m[1]) |
| 5 | 1 | 11 | 91 | 1090 | 7.6:7.4 |
| 6 | 2 | 24 | 62 | 2860 | 22.1:18.3 |
| 7 | 2 | 58 | 76 | 5000 | 22.1:43.5 |
| 8 | 2 | 202 | 90 | 8570 | 22.1:85.4 |
| 9 | 4 | 49 | 77 | 15,000 | 47.2:144 |

[1] Sulfonate ester terminated polypropylene glycol initiator of Example No.
[2] Initial no. of moles of monomer divided by initial no. of moles of initiator
[3] Calculated from VPO molecular weight data

All of the block copolymer products were soluble in water. Analysis by gel permeation chromatography confirmed that the products consisted exclusively of block copolymer (no measurable amount of unreacted polypropylene glycol was present). Since not all of the hydroxyl groups of the polypropylene glycols were converted to sulfonate ester groups, it is assumed that the products are mixtures of AB and ABA block copolymers [A = poly(N-acetylethylenimine) block, B = polyoxypropylene block].

Surface tension of values of the block copolymers of Examples 6-8 at a variety of concentrations in water are shown in Figures 1 and 2. Generally speaking, the more effective a surfactant the lower the surface tension will be at a given concentration. In Figure 2, it may be seen that the surface tension lowering properties of the block copolymers of this invention are comparable to or better than those of a commercial propylene oxide/ethylene oxide block copolymer surfactant.

Additionally, oxyalkylene/N-acylalkylenimine block copolymers may be distinguished from PO/EO surfactants by their strong affinity towards water. The block copolymers of Examples 6 and 8 do not precipitate from aqueous solution even at 100°C. This finding is remarkable in view of the fact that conventional PO/EO surfactants exhibit a cloud point at 40-80°C in aqueous solution.

EXAMPLES 10-13

These examples demonstrate the use of other sulfonate ester terminated polyoxyalkylene glycols and monomers in the preparation of the block copolymers of this invention.

To prepare the sulfonate ester terminated polyoxyalkylene glycols, the sulfonyl chlorides listed in Table 3 are added to stirred solutions of the polyoxyalkylene glycols A-D in 30 mL anhydrous pyridine maintained at about 5°C in an ice bath. The sulfonyl chloride is used in slight molar excess relative to the polyoxyalkylene glycol hydroxyl groups (1.2 equiv. per equiv. of hydroxyl). After standing several days at 0°C, the reaction mixture is poured into 300 mL of an ice-water mixture and then extracted three times with 100 mL portions of methylene chloride. The methylene chloride extracts are combined and dried over potassium carbonate. The methylene chloride is removed using a rotary evaporator and the resulting sulfonate ester terminated polyoxyalkylene glycol product purified by solvent/non-solvent precipitation as described in Examples 1-4.

The block copolymers are obtained by heating mixtures of solvent, sulfonate ester-terminated polyoxyalkylene glycol, and oxazine or oxazoline monomer as indicated in Table 3 at temperatures and for periods of time effective to accomplish polymerization of the monomer. The block copolymer products are purified using the same procedure described in Examples 5-9. The expected molecular weights and unit ratios are given in Table 3.

TABLE 3

| Example | 10 | 11 | 12 | 13 |
|---|---|---|---|---|
| Polyoxyalkylene Glycol | A | B | C | D |
| Mn | 1200 | 1500 | 3000 | 1000 |
| Sulfonyl Chloride | $MeSO_2Cl$ | p-$MePhSO_2Cl$ | $CF_3SO_2Cl$ | p-$BrPhSO_2Cl$ |
| Monomer[a], R' = | H | Et | Pr | H |
| n = | 2 | 2 | 2 | 3 |
| $[M]_o/[I]^b_o$ | 75 | 100 | 150 | 40 |
| Solvent | nitromethane | acetonitrile | DMF | neat |
| Time (hr)/Temp (°C) | 24/70 | 5/100 | 12/80 | 10/60 |
| Mn Block Copolymer (expected)[c] | 6525 | 11,400 | 19,950 | 4400 |
| Unit Ratio Expected $[n:(m + m^1)]^c$ | 19.7:75 | 25.9:100 | 51.7:150 | 17.8:40 |

A = random 1200 molecular weight diol containing 75 weight percent propylene oxide and 25 weight percent 1-butene oxide, prepared in accordance with U.S. Pat. No. 3,941,849.

B = Thanol® SF-1502 (1500 molecular weight propylene oxide triol sold by ARCO Chemical Company)

C = 3000 molecular weight propylene oxide diol, prepared in accordance with U.S. Pat. No. 3,941,849.

D = random 1000 molecular weight diol containing 95 weight percent propylene oxide and 5 weight percent allyl glycidyl ether, prepared in accordance with U.S. Pat. No. 3,941,849.

[a] 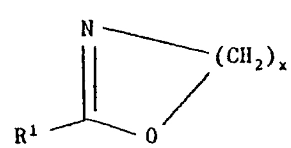

[b] Initial number of moles of monomer divided by initial number of moles of initiator (sulfonate ester terminated polyoxyalkylene glycol).

[c] Assuming quantitative conversion of polyoxyalkylene glycol hydroxy groups to sulfonate ester and quantitative conversion of monomer.

## Claims

1. A copolymer comprised of a polyoxyalkylene block and at least one poly(n-acylalkylenimine) block, said copolymer having the general structure

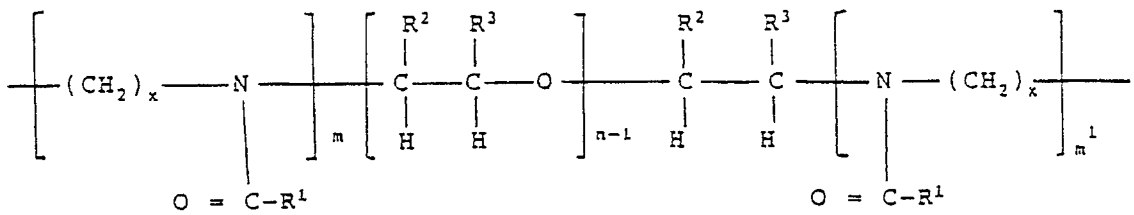

wherein x is 2 or 3, $R^1$ is hydrogen or $C_1$-$C_3$ alkyl, n and (m + $m^1$) are each at least about 5, and $R^2$ and $R^3$ are the same or different and are hydrogen, $C_1$-$C_{12}$ linear, branched, or cyclic alkyl, provided $R^2$ and $R^3$ are not both hydrogen, or $R^2$ and $R^3$ are covalently linked $C_{1-12}$ linear, branched, or cyclic alkyl groups.

2. A copolymer according to claim 1 comprised of a polyoxypropylene block and at least one poly(n-acetylethylenimine) block, said copolymer having the general structure

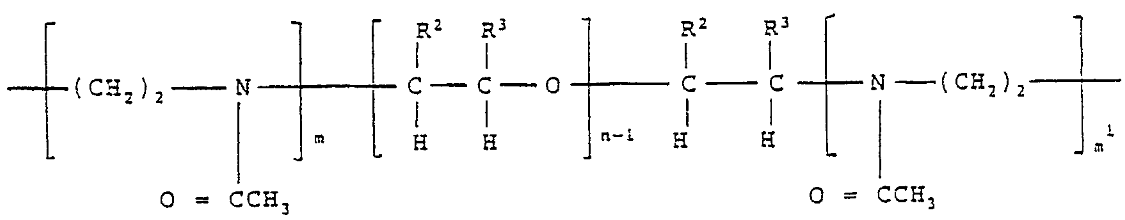

wherein $R^2$ and $R^3$ are different and are hydrogen or methyl and n and (m + $m^1$) are each at least about 5.

3. The copolymer of claim 1 wherein the poly(N-acylalkylenimine) block is a poly(N-acetylethylenimine) block.

4. The copolymer of any one of claims 1 to 3 having one polyoxyalkylene block and two poly(N-acylalkylenimine) blocks.

5. The copolymer of any one of claims 1 to 3 having one polyoxyalkylene block and one poly(N-acylalkylenimine) block.

6. The copolymer of any one of the preceding claims wherein the number average molecular weight of the polyoxyalkylene block is from about 400 to 3000.

7. The copolymer of any one of the preceding claims wherein the polyoxyalkylene block is a polyoxypropylene block.

8. The copolymer of any one of the preceding claims wherein the unit ratio of n to (m + $m^1$) is from about 5:5 to 50:150.

9. The copolymer of any one of the preceding claims wherein the number average molecular weight of the copolymer is from about 750 to 20,000.

10. A process for producing a copolymer according to any one of the preceding claims comprising reacting a sulfonate ester terminated polyalkylene glycol with a 2-oxazoline or 1,3-oxazine monomer under conditions effective to achieve polymerization of the monomer.

11. The process of claim 10 wherein the sulfonate ester terminated polyalkylene glycol is a p-nitrobenzene sulfonate terminated polypropylene glycol.

12. The process of claim 10 or claim 11 wherein the monomer is 2-methyl-2-oxazoline.

13. The process of any one of claims 10 to 12 wherein the number average molecular weight of the sulfonate ester terminated polyalkylene glycol is from about 400 to 3000.

14. The process of any one of claims 10 to 13 wherein the molar ratio of monomer to sulfonate ester terminated polyalkylene glycol is from about 5:1 to 225:1.

15. The process of any one of claims 10 to 14 wherein a reaction temperature of from about 25°C to 200°C is employed.

16. A method of reducing the surface tension of an aqueous medium which comprises combining an effective amount of the copolymer of any one of claims 1 to 9 with the aqueous medium

FIGURE-1

Surface Tension Curves at 20°C.

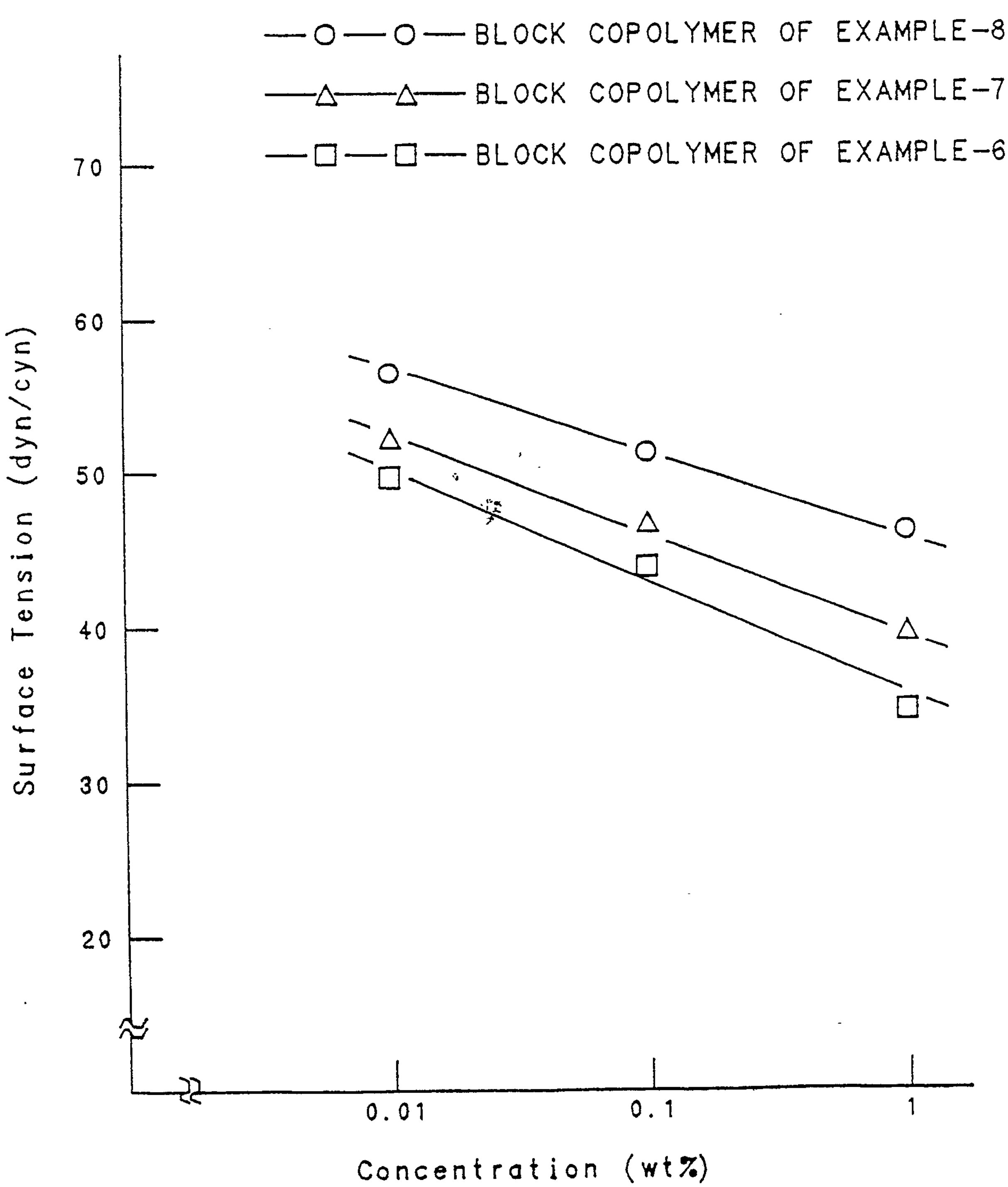

FIGURE-2

Surface Tension Curves at 20°C.

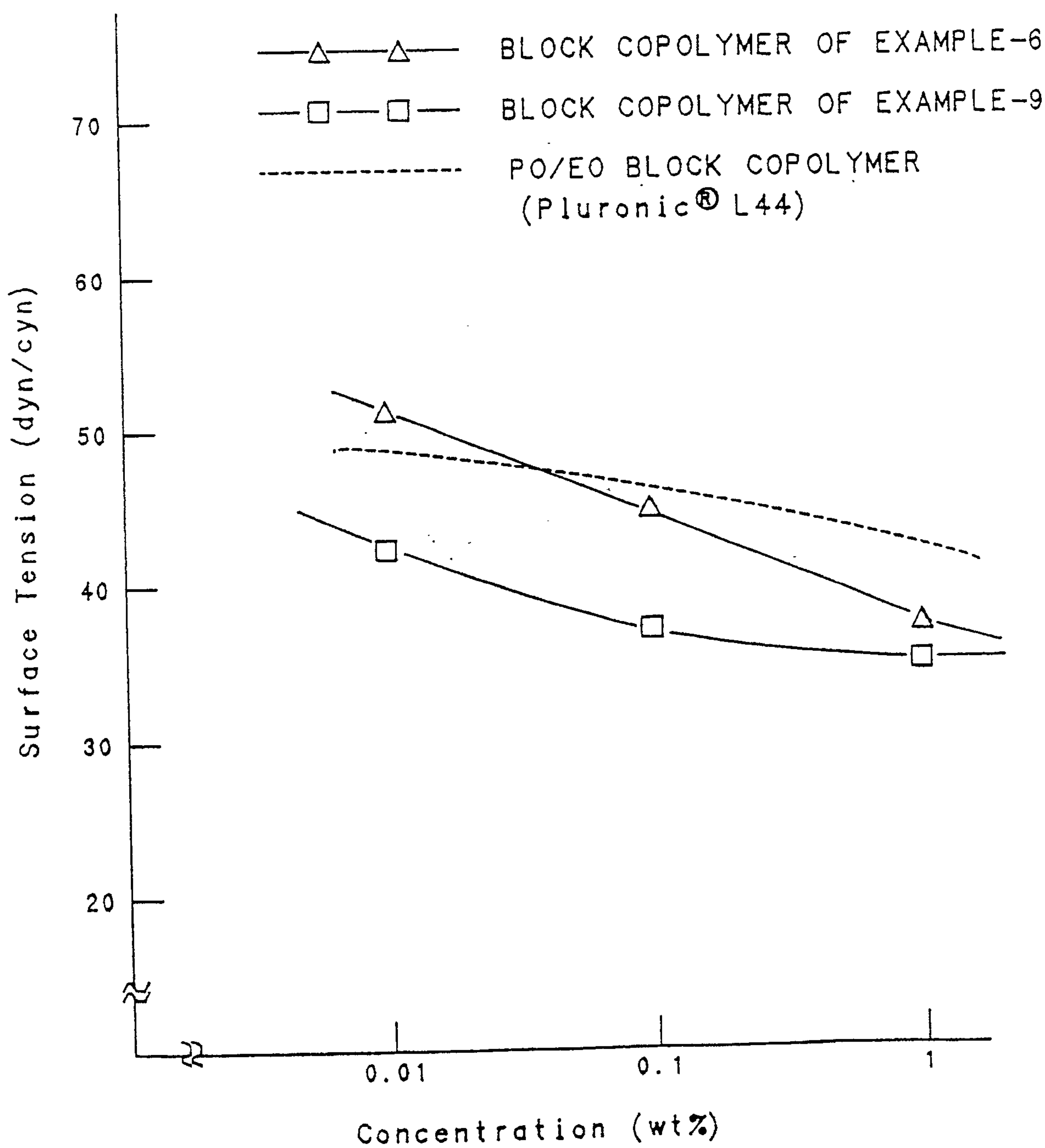

European Patent Office

# EUROPEAN SEARCH REPORT

Application Number

EP 90 31 2711

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 257 623 (THE BRITISH PETROLEUM COMPANY LIMITED) * claims 1-5 * | 1-9 | C 08 G 73/02<br>C 08 G 81/00<br>C 08 G 65/32 |
| Y | FR-A-2 483 456 (SANDOZ PRODUCTS LIMITED) * claims 1, 2 * | 1-9 | |
| A,D | US-A-4 703 085 (DEAN) * the whole document * | 1-16 | |
| | | | **TECHNICAL FIELDS SEARCHED (Int. Cl.5)** |
| | | | C 08 G<br>C 08 L |

The present search report has been drawn up for all claims

| Place of search | Date of completion of search | Examiner |
|---|---|---|
| The Hague | 20 February 91 | GLANDDIER A. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document